# EUROPÄISCHE PATENTANMELDUNG

(11) **EP 2 071 273 A2**
(43) Veröffentlichungstag der Anmeldung: **17.06.2009**
(21) Anmeldenummer: 08019472.3
(22) Anmeldetag: 07.11.2008
(51) Int. Cl.: F41H 7/04

(54) **Fahrwerkmodul für ein aus mehreren Modulen zusammensetzbares Radfahrzeug**

(30) Priorität: 15.12.2007 DE 102007060503
(71) Anmelder: Rheinmetall Landsysteme GmbH, 24107 Kiel (DE)
(72) Erfinder: Hass, Frank, 24235 Wendtorf (DE); Boeckmann, Frank, 24623 Großenaspe (DE); Landahl, Karsten, 22869 Schenefeld (DE); Kock, Flemming, 24116 Kiel (DE)
(74) Vertreter: Dietrich, Barbara

(57) **Zusammenfassung**

Die Erfindung betrifft ein Fahrwerkmodul für ein aus mehreren Modulen zusammensetzbares Radfahrzeug, insbesondere für ein gepanzertes Radfahrzeug, wobei das Fahrwerkmodul ein Gehäuse (1) umfasst, in dem ein Antriebsmotor sowie ein Ausgleichsbehälter (5) für ein den Antriebsmotor kühlendes flüssiges Kühlmittel und eine die beiden Seitenwände (3, 4) des Gehäuses (1) beabstandende, quer verlaufende Versteifungsrippe (5) angeordnet sind.

Um durch Zusammenfassung einzelner Baugruppen den zur Verfügung stehenden Platz innerhalb des Gehäuses (1) des Fahrzeugs bzw. Fahrwerkmoduls optimal auszunutzen, schlägt die Erfindung vor, die innerhalb des Gehäuses (1) angeordnete Versteifungsrippe (5) derart auszubilden, dass sie gleichzeitig auch als Ausgleichsbehälter für das verwendete Kühlmittel (beispielsweise Öl) dient.

## Beschreibung

Die Erfindung betrifft ein Fahrwerkmodul für ein aus mehreren Modulen zusammensetzbares Radfahrzeug mit den im Oberbegriff des Anspruchs 1 angegebenen Merkmalen.

Ein aus mehreren unterschiedlichen Modulen zusammensetzbares gepanzertes Radfahrzeug ist beispielsweise aus der DE 10 2004 006 819 A1 bekannt. Bei diesem bekannten Fahrzeug werden durch vertikale Fahrzeugtrennung im Wesentlichen drei Module erzeugt, nämlich ein mittleres Hauptmodul zur Aufnahme der Besatzung des Fahrzeuges sowie ein Front- und ein Heckmodul. Bei dem Front- und Heckmodul handelt es sich im Wesentlichen um Fahrwerkmodule, welche zusätzlich zu den Rädern und Radführungen auch die Antriebsmotoren und Getriebe umfassen.

Bei den bekannten Fahrwerkmodulen müssen relativ viele Baugruppen innerhalb des jeweiligen, beispielsweise wannenförmigen Gehäuses der einzelnen Module untergebracht werden, obwohl der zur Verfügung stehende Platz bei derartigen Modulen begrenzt ist. Dieses führt unter anderem dazu, dass ein Austausch der einzelnen Baugruppen (Motor, Getriebe, Kühlmitteltank etc.) im Gelände häufig nur unter erheblichem Aufwand durchgeführt werden kann.

Der Erfindung liegt die Aufgabe zugrunde, ein Fahrwerkmodul der eingangs erwähnten Art anzugeben, bei dem eine erhebliche Platzeinsparung angestrebt wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, durch Zusammenfassung einzelner Baugruppen den zur Verfügung stehende Platz innerhalb des Gehäuses optimaler auszunutzen. Realisiert wird die dadurch, dass eine innerhalb des Gehäuses des jeweiligen Fahrzeugs oder Fahrwerkmoduls angeordnete Versteifungsrippe derart ausgebildet ist, dass sie beispielsweise gleichzeitig auch als Ausgleichsbehälter für das verwendete Kühlmittel (beispielsweise Öl) für den wenigstens einen Antriebsmotor verwendet werden kann. Die Versteifungsrippe selbst bewirkt ihrerseits eine Stabilisierung der Module bzw. der Seitenwände.

Dabei hat es sich als vorteilhaft erwiesen, wenn die Versteifungsrippe aus zwei übereinander und parallel zueinander angeordneten Vierkant-Hohlprofilen besteht, welche mittig über ein drittes Hohlprofil miteinander verbunden sind. Die Verbindung der übereinander liegenden Hohlprofile stellt sicher, dass auch bei großen Fahrzeug-Schräglagen, wie sie bei Geländefahrten auftreten können, die an dem unteren Hohlprofil angeordneten Sauganschlüsse unterhalb des jeweiligen Kühlmittelstandes liegen.

Durch diese Form des Kühlmittelbehälters wird die bei bekannten Fahrwerkmodulen quer durch das Gehäuse verlaufende Leitung für das Kühlmittel überflüssig. Außerdem schafft die mittige Verbindung der Hohlprofile Raum für einen Kühlmittelstand-Sensor.

Am oberen Hohlprofil kann zudem eine Kühlmittelnachfüllöffnung vorgesehen sein.

Weitere Einzelheiten und Vorteile der Erfindung ergeben sich aus den folgenden, anhand von Figuren erläuterten Ausführungsbeispielen. Es zeigen:
- Fig. 1: einen Querschnitt durch das Gehäuse eines erfindungsgemäßen Fahrwerkmoduls mit einer als Ausgleichsbehälter für ein Kühlmittel ausgebildeten Versteifungsrippe;

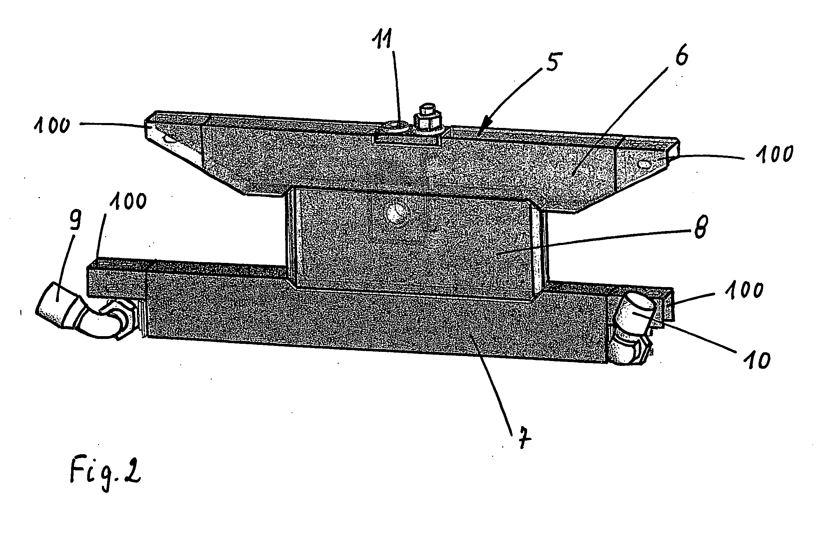

- Fig. 2 und 3: perspektivische Ansichten der in Fig. 1 dargestellten Versteifungsrippe in Vorder- und Rückansicht.

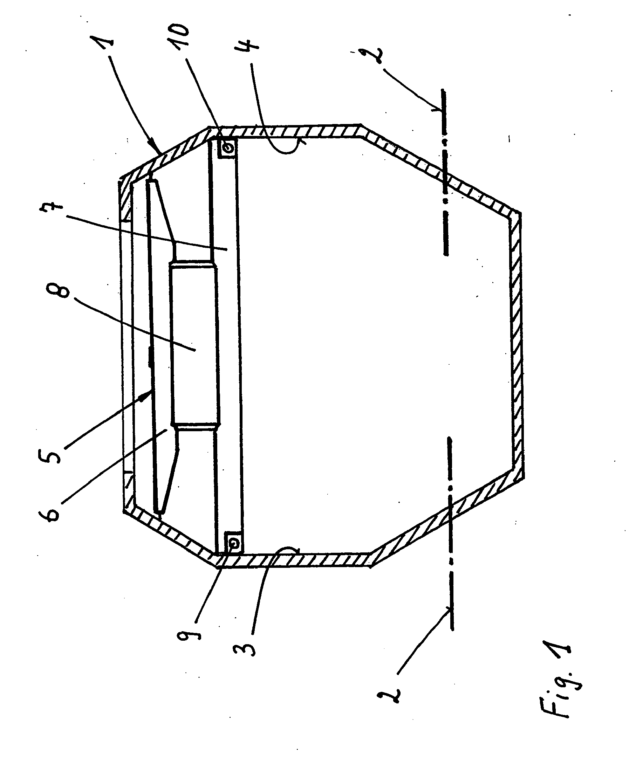

In Fig. 1 ist mit 1 schematisch das Gehäuse eines Fahrwerkmoduls für ein modular aus mehreren Modulen zusammensetzbares gepanzertes Radfahrzeug wie beispielsweise aus der DE 10 2004 006 819 B4 bekannt, dargestellt, wobei die Radachse der nicht dargestellten Räder mit einer strichpunktierten Linie 2 angedeutet ist.

Bei diesem Fahrwerkmodul kann es sich beispielsweise um das Frontmodul eines Fahrzeuges handeln, an dem die Vorderräder befestigt sind. Der in dem Gehäuse 1 üblicherweise angeordnete Antriebsmotor sowie das dem Antriebsmotor nach geschaltete Getriebe etc. wurden aus Übersichtlichkeitsgründen ebenfalls nicht dargestellt.

Zwischen den beiden Seitenwänden 3, 4 des Gehäuses 1 ist eine die beiden Seitenwände 3, 4 beabstandende, quer verlaufende Versteifungsrippe 5 angeordnet, die sich oberhalb des nicht dargestellten Antriebsmotors befindet.

Erfindungsgemäß ist diese Versteifungsrippe 5 derart ausgebildet, dass sie als Ausgleichsbehälter für das Kühlmittel (in diesem Fall Öl) dient. Sie setzt sich hierzu aus zwei übereinander und parallel zueinander angeordneten Vierkant-Hohlprofilen 6, 7 zusammen, welche mittig über ein mittleres Hohlprofil 8 miteinander verbunden sind und randseitig jeweils C-förmig ausgebildete Befestigungsprofile 100 aufweisen.

Dabei ist der Ausgleichsbehälter 5 mittels der seitlich an dem unteren Hohlprofil 7 angeordneten Anschlüsse 9, 10 mit dem entsprechenden Kühlmittelkreislauf des Antriebsmotors verbunden. Außerdem befindet sich an dem oberen Hohlprofil 6 eine mittels einer Schraube 11 verschließbare Kühlmittelnachfüllöffnung.

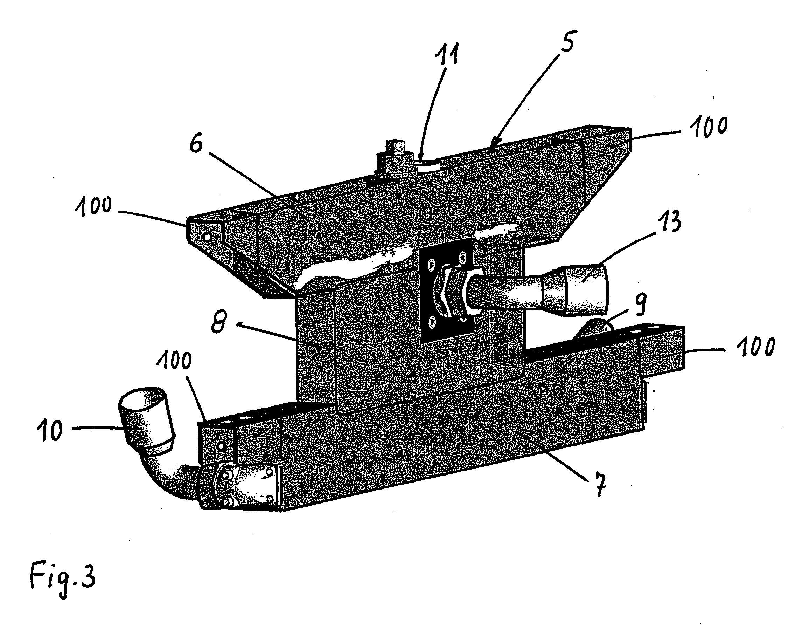

An dem mittleren Hohlprofil 8 ist ein weiterer Anschluss 13 (Fig. 3) für einen Sensor zur Bestimmung des aktuellen Kühlmittelstandes vorgesehen.

Das Ausführungsbeispiel legt die Anwendung für ein modulares Fahrzeug nahe, ist aber nicht darauf beschränkt. Vielmehr kann die Versteifungsrippe auch in anderen Fahrzeugen bzw. an anderen Fahrzeugseitenwänden eingesetzt werden und verschiedene Funktionen erfüllen, beispielsweise im Zusammenhang mit einer Klimaanlage.

### Bezugszeichenliste

- 1: Gehäuse
- 2: Radachse
- 3,4: Seitenwände
- 5: Versteifungsrippe, Ausgleichsbehälter
- 6: (oberes) Hohlprofil
- 7: (unteres) Hohlprofil
- 8: (mittleres) Hohlprofil
- 9,10: Anschlüsse
- 11: Schraube
- 13: Anschluss
- 100: Befestigungsprofil

## Patentansprüche

1. Fahrzeug mit einem Gehäuse (1) mit zwei voneinander beabstandete Seitenwände (3, 4), **dadurch gekennzeichnet, dass** eine vorzugsweise quer verlaufende Versteifungsrippe (5) an wenigstens einer der Seitenwände (3, 4) angeordnet sind, die hohl ausgeführt auch als Ausgleichsbehälter für ein Kühlmittel ausgebildet sein kann.

2. Fahrzeug nach Anspruch 1, **dadurch gekennzeichnet, dass** die Versteifungsrippe (5) aus zwei übereinander und parallel zueinander angeordneten Hohlprofilen (6, 7) besteht, welche mittig über ein mittleres Hohlprofil (8) miteinander verbunden sind.

3. Fahrzeug nach Anspruch 2, **dadurch gekennzeichnet, dass** es sich bei den Hohlprofilen (6-8) um Vierkant-Hohlprofile handelt.

4. Fahrzeug nach Anspruch 2 oder 3, **dadurch gekennzeichnet, dass** seitlich an dem unteren Hohlprofil (7) Anschlüsse (9, 10) zur Verbindung des Ausgleichsbehälters (5) mit dem Kühlmittelkreislauf des wenigstens einen Antriebsmotors oder einer Klimaanlage etc. angeordnet sind.

5. Fahrzeug nach einem der Ansprüche 2 bis 4, **dadurch gekennzeichnet, dass** an dem mittleren Hohlprofil (8) ein Anschluss (13) beispielsweise für einen Kühlmittelstand-Sensor angeordnet ist.

6. Fahrzeug nach einem der Ansprüche 2 bis 5, **dadurch gekennzeichnet, dass** am oberen Hohlprofil (6) beispielsweise eine Kühlmittelnachfüllöffnung vorgesehen ist.

7. Fahrwerkmodul nach einem der Ansprüche 1 bis 6, **dadurch gekennzeichnet, dass** die Versteifungsrippe (5) im Bereich oberhalb des Antriebsmotors angeordnet ist.

8. Fahrwerkmodul nach einem der Ansprüche 1 bis 7, **dadurch gekennzeichnet, dass** es sich bei dem Kühlmittel um Öl handelt.

9. Fahrzeug nach einem der Ansprüche 1 bis 8, **dadurch gekennzeichnet, dass** es ein aus mehreren Modulen zusammensetzbares Radfahrzeug, insbesondere gepanzertes Radfahrzeug ist.
